# EUROPEAN PATENT APPLICATION

(11) **EP 1 069 785 A2**
(43) Date of publication of application: **17.01.2001**
(21) Application number: 00113478.2
(22) Date of filing: 26.06.2000
(51) Int. Cl.: H04Q 3/00

(54) **Data transmission and service management system for public transports**

(30) Priority: 15.07.1999 IT CO990021
(71) Applicant: E.T.S. Elettronica Terminal Sistemi S.r.L., 20148 Milano (IT)
(72) Inventor: Nessi, Alessandro, 20148 Milano (IT)
(74) Representative: Lecce, Giovanni

(57) **Abstract**

Public transports and services in general are managed by a system of data transmission and management which comprises 〈〈intelligent〉〉 peripheral stations and/or stakes (2) (of generation, process, management and/or remote re-loading and/or transmission and/or re-transmission of data) and optional intermediate connecting devices or repeaters (3) that, together with the fixed peripheral stations and/or the stakes, form an 〈〈intelligent〉〉 radio network (1) wherein each component acts as a point of access, formation and process of the information and possible direct and/or indirect distribution of the same; said network (1) being connected through commonly used transport means (radio, PSTDN, ISDN, optical fibers, GSM, satellite broadcasting, UMTS and the like), with a data collection, control, processing and display center (6) and/or with fixed terminals and/or mobile terminals (4, 8) that can be localized also through the access points.

## Description

The present invention relates to a data transmission and service management system for public transports.

More particularly, the present invention relates to a data transmission and service management system suitable for buses, taxis, trains, ferryboats and like mobility associated services.

The system of the present invention comprises 〈〈intelligent〉〉 peripheral stations and/or stakes (or generation, processing, management and/or remote re-loading and/or transmission and/or re-transmission of data) and possible intermediate connecting devices or repeaters that, together with the fixed peripheral stations and/or the stakes, form an 〈〈intelligent〉〉 radio network wherein each component acts as a point of access, formation and processing of the data and possible direct and/or indirect distribution of the same.

The network can be connected through commonly used transport means (radio, PSTDN, ISDN, optical fibres, GSM, satellite link or UMTS and the like), with a data collection, control, processing and display center and/or fixed terminals and/or mobile terminals that can be localised also through the access points.

Systems for surveying the service state and the instantaneous location of vehicles using onboard instrumentation are already known. Said systems are connected with a central station through a radio link or other communication systems such as: telephone, PSTN, GSM, ETACS, or satellite link, and may be optionally provided with a direct connection between the central stations and the stops, to inform also users about the state of the service.

The drawbacks of said radio or radio-telephone systems arise from the fact that each information is transmitted with the use of expensive devices and high power radios. The utilisation of these systems may depend on government franchises and/or possible rents for the use of third parties' networks.

The high consumption of the systems provided with such radios result in high costs due to the realisation of infrastructures for supplying power to peripheral stations.

Moreover, the data or information is often managed and transmitted in centralised form.

Object of the present invention is to eliminate the above drawbacks.

In its general aspect the present invention solves the above drawbacks by means of a data transmission and management system of services associated to mobility in public transports, and public services in general, which utilises an "intelligence" (or capacity of generation, processing, management and/or remote re-loading and/or transmission and/or re-transmission of data) distributed across all the service network instead of being concentrated in one only central station.

The subject matter of the present invention is, therefore, a data transmission and service management system for public transports comprising 〈〈intelligent〉〉 fixed peripheral stations and/or stakes and optional intermediate connecting devices or repeaters forming with the fixed peripheral stations and/or stakes an 〈〈intelligent〉〉 radio network, wherein each component acts as a point of access, formation and processing of the information and optional direct and/or indirect distribution of the same; said network (1) being connected through commonly used transport means with a data collection, control, processing and display center and/or with fixed and/or mobile terminals localised also through the access points

The advantages achieved with the present invention lie essentially in that the system allows a remarkable saving in terms of precise traffic information.

By the short connections it is possible to use less expensive, low-power radio devices, without problems of franchise of the frequencies utilised and lower costs from the point of view of consumption.

Another advantage lies in that any access point can autonomously interact with any other point of the network.

A further advantage ensues from the fact that the low power utilised by the radio generates an insignificant electromagnetic pollution.

The invention is described in details in the following with reference to the figures of the drawings which illustrate general lines of the system only provided by way of non-limiting examples, wherein:
Figure 1 is the general functional diagram of a whole of devices constituting an example of network,
Figure 2 shows the overall diagram of the system of the present invention,
Figure 3 shows the diagram of a repeater,
Figure 4 shows the diagram of a fixed station or stake, and
Figure 5 shows the diagram of a mobile terminal.

With reference to the figures, the illustrated system has the main functions of generating, processing, management, transmission and/or re-transmission of data, called network (1).

The parts indicated on the figures with a continuous line are always present in the components described, while those with a dotted line are optional parts that may or may not be present in the same components.

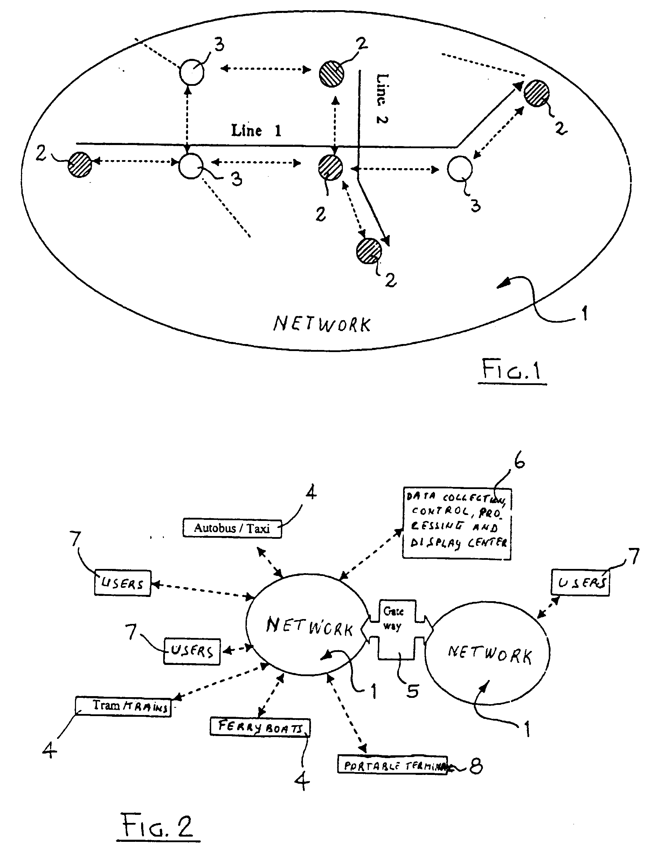

With reference to figure 1, network (1) comprises a whole of devices or nodes (fixed peripheral stations and/or stakes (2), repeaters (3)), each of them being able to be connected temporarily by radio with adjoining devices. The passage of data from one to another point of the network (1) takes place by transferring the messages through several adjoining nodes (2, 3) that form possible logic pathways between the sender and the addressee. The connection between the two elements of the network (1) occurs only for the time necessary for the transit of the data, after which the radio channel is freed.

The structure of the system is such as to allow the transfer of the messages arrived at or created by the transmitting or addressed nodes, not only along pre-defined pathways but also along alternative pathways to reach their destination. Several terminals may be hooked on to the network (1), subdivided into two classes:
- a) fixed access terminals, and
- b) mobile access terminals.

The access to the network (1) by the fixed terminals does not change and said fixed terminals may be reached by any other component of the system at any moment.

For the mobile terminals, the access node changes in the time; as a consequence, they can reach easily any other component of the network connected in a permanent manner, but they can receive messages from the network only through the node (2, 3) to which they are connected at that time, which is caused to be temporarily fixed. Such condition is signalled each time to the network.

It is noted that the access points to the network are fixed and have known co-ordinates, so that, once the verification of the proximity of a mobile terminal to a given access node to the network has been checked, it is possible to ascertain the exact position of said terminal and thus to localise it indirectly.

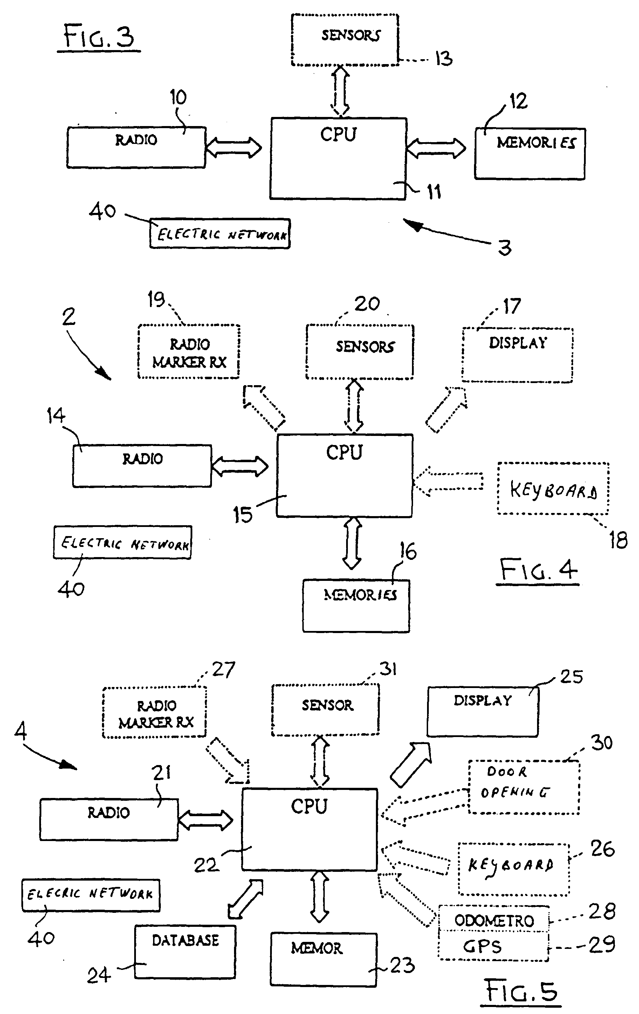

Figure 4 illustrates the fixed station or stack (2); it comprises a radio (14) for the node-to-node communication and to allow the access to the terminals: one or more microprocessors (15); one or more memories (16) for the management of the communications and the re-addressing of the messages; optionally a display (17) with an optional printer for visualising and/or sending the information to users (7); optionally a keyboard (18) for receiving inputs from users requiring different visualisations on the display or for sending communications to other devices connected to the network (1); optionally a radio marker (10), and optionally sensors (20), which can be, for instance, temperature, pressure, humidity, proximity sensors and the like.

The power of each fixed station is supplied by high-capacity batteries, by batteries which can be re-charged through sun cells, or by connection to the electric network (40).

On each fixed station and/or stack (2) an application level is provided which sees to the local management of the specific functionality of the system. In particular, in the case of the management of the public transport network, for instance of the buses, it adjusts the theoretical timetable according to the real line space covered by the expected vehicles, manages the re-routing of the data along the line, manages the data or information to be visualised to users (7), manages the sending and the addressing of the communication requests generated by the users (7) through the keyboard (18), implements the additional application levels, such as for instance the messages for the traffic-lights or the information to users through tables or optical boards concerning road conditions, parking availability, coincidences with other public means, and so on.

Figure 3 illustrates the repeater (3); it comprises a radio (10) for the communication from a node to the adjoining one and that of access to terminals; one or more microprocessors (11); one or more memories (12) for the management of communications and the re-addressing of messages; and optionally sensors (20), such as for instance temperature, pressure, humidity, proximity sensors and the like. The power of each repeater is supplied by high-capacity batteries, by batteries which can be re-charged through sun cells, or by connection to the electric network (40).

The connection means between different networks (gateways) (5) may be performed by various devices such as:
a) radio devices such as repeaters, with the particular characteristics of being able to accept communications from different networks that cannot have a 〈〈dialogue〉〉 with each other; for instance, repeaters can be utilized that are provided with two radios, synchronised each with a different network;
b) satellite transmission devices that allow a node-to-node or node-to-terminal communication;
c) fixed devices that utilise a fixed support network as one of the carriers, such as a dedicated and/or commuted telephone line or an optical fibre local network, to connect different sections or networks to each other, or to utilise these fixed supports to effect connections with another network, such as for instance Internet.

A fixed structure of a sole network, composed by various peripheral fixed stations and/or stacks (2) or repeaters (3), can be implemented with one or more virtual or logic networks.

In the scheme illustrated in Figure 1, lines 1 and 2 are conceptually associated to different virtual networks.

A network for the management of another service, for instance that of taxi or other means, may be utilised on the same structure.

From the Hardware point of view, the same structures are used, while from the virtual point of view two different circuits are used. In this case, the gateway function is performed by the common structures between different virtual networks, for instance, simple repeaters.

Fixed accesses: this group comprises the accesses that are permanently connected with a node (2, 3) of the network (1). The connection may be of the serial (also USB) or parallel type, directed towards the internal memory of one of the two connected devices, or of the type with Hardware coding of messages (keyboard).

A data collection, control, processing and display center (6) consisting of one or more computers, optionally connected in LAN provided with a special Software, is connected to the network by wiring harness. This center (6) performs the function of system control and manages both network maintenance and service monitoring. Beside the management of the network architecture, it is possible to monitor the service progress, or to send messages to the various terminals or nodes (2, 3) of the network (1).

Usually, the presence of at least an operator is necessary for the control of the center (6), even though some data, such as for instance the state of service, is automatically updated with the information coming from the network.

The access point of users (7) usually comprises a keyboard and a display, optionally with a printer, located near the fixed stations and/or stakes (2). Through the keyboard, the user can browse through all the messages available for the visualisation on the display and possibly print them, or send requests to the network (1) through suitable function buttons, such as for instance service upon request and the like.

The mobile accesses comprises those terminals that are not permanently connected to the network, adopting instead a temporary radio connection.

These devices can shift within the network (1) and connect each time to a different node (2, 3) or they can stop, causing the connection to the network to be temporarily fixed, becoming the equivalent of a fixed terminal.

The mobile terminals include:
a) Transport means (4): these are all those electronic devices that are installed on motor-vehicles, such as buses, taxis, trains, ferryboats and the like that are necessary for managing the application functions of the mobile means. They comprise ( see Figure 5) a radio (21) for the connection with the network nodes o other terminals; one or more microprocessors (22); one or more memories (23) with a function of generation, processing, management and/or remote loading and/or transmission and/or re-transmission of the supporting database (24); an optional display (25); an optional keyboard (26); one or more optional external information devices such as for instance: a radio marker (27), odometer (28), GPS (29), door opening (30), and sensors (31) such as for instance temperature, pressure, humidity, proximity sensors and the like.
   These terminals are able to connect to any node (2, 3) of the network (1), either in a precise manner, i.e. concerning the time transit of the data between two points, for contingent communications, or in a temporarily fixed manner, to be available to the other terminals.
b) Portable terminals (8) can be used; they comprise all the terminals allotted to users and operators. They may be: terminals for the maintenance of the network, terminals to provide information to isolated zones of the network, terminals allotted to users for additional services to be implemented.

The main carrier utilised for the connection within the network can be, by way of non-limiting example, a low-power radio, operating in the field of frequencies comprised between 2400 and 2483,5 MHz of the 〈〈Spread Spectrum〉〉 type, in order to be able to utilise devices complying with the ETS 300-328 standards in force, or operating at different frequencies, according to the standards in force in the various countries where the system of the present invention will be used.

It is however obvious to those skilled in the art that, in case of revision and/or replacement of the above standards, radios having different characteristics, adequate for the new provisions, may be adopted. As an alternative to, or an integration of, the above type of radio, the following may be utilised: 433 MHz (ETS 300-220) or 868 MHz AM or FM radios, or other frequencies used in the countries where the system will be adopted. Satellite transceivers, terminals for the connection to GSM network, dedicated or commuted telephone lines can be, instead, utilised in gateway (5) devices.

A whole set of services can be implemented on this network, such as, for instance and in particular, the system of data transmission and survey of the state of service, applied to public transports, such as buses, taxis, trains, ferryboats and the like. In detail, the application in each individual function foresees:
A) Management of the localisation of buses or public transport means in general: its object is to provide indications to the data collection, control, processing and display center (6) and to users (7) about the real localisation of the transport means being monitored. The management is subdivided into two basic functions:
A.1) Determination of the position: it is implemented by integrating different systems, used according to different priority levels and crossed in such a way as to control each other, or caused to step in, in case of malfunction of one of the systems. The mechanisms utilised for the determination of the position comprise:
   A.1.1) Door opening (30): this is essentially based on the concept of the next stop scheduled. In case of door opening, the system controls if this is due to the actual reaching of the scheduled stop, performing a communication attempt with the network node (peripheral station and/or stake (2)), located in correspondence with said stop.
   A.1.2) Odometer (28): this is a method based on the estimate of the distance covered. It is a device mounted on a vehicle that measures the distance covered based on wheel rotations: This device is used as an integration of the door opening method to define the zones where said opening is associated to the reaching of the stop, to start the procedure of verification of such association also when the vehicle passes before the stop without stopping.
   A.1.3) Radio marker RX (27): this may be a transponder, or a radio set alternative to the one of connection with the network. This device, positioned along the run, usually near the peripheral stations and/or stakes (2), is usually a short-reach device with an associated code which, if it is received, makes sure about the actual position, allowing to re-synchronise the system in case of deviations from the run, and in any case to re-synchronise the odometer (28) periodically. It is an optional device for the system and its activation can be also required only in case of real need, so as to reduce consumption.
   A.1.4) GPS system (29): this is based on the survey of the position carried out by crossing the signals coming from a satellite system. It requires a corresponding device and an adequate software installed on vehicles and, in view of intrinsic errors and the occasional standstills of the system, it shall be always utilised with the integration of the other systems described.
A.2) Transmission of Information to the data collection, control, processing and display center (6) and to the users **(7)**: in the management system of the town transport network (1), for instance of buses and the like, there are many subjects who are interested in receiving the information concerning a given vehicle: the center (6), the users (7) at the stops along the line which the bus is covering, optionally other vehicles which, in order to leave, are waiting for the confirmation of the position reached by other mobile means.
   Onboard instrumentation selects the addressees of the data or information, with the possibility of transmitting only in the differential mode, if the deviation set by a theoretical schedule exceeds a given percentage. The onboard instrumentation connects with the first network node (2, 3) available and sends the information indicating the subject desired; the network itself sees to the correct routing of the information.
B) Management of the theoretical timetable: object of this application is to provide users (7), on a display (17), with the expected theoretical timetable of passage of vehicles, and to allow the service manager to update such timetable by radio, without a wandering operator with the task of replacing all the paper timetables of the line. A program in the center (6) manages the insertion of the expected timetable and optionally the messages to be visualised to users (7), such as, for instance, run variations, temporary service interruptions, and the like; after which the center (6) sends to the fixed peripheral stations and/or stakes (2) concerned the new timetable by connecting with the network or through a portable terminal (8) managed by an operator. Users are provided with a display (17) with a keyboard (18) and optionally a printer which allows them, after having selected the line requested among those scheduled on that fixed peripheral station and/or stake (2), to browse through the expected passage timetable and optionally to make a copy of the information.
C) Management of the actual timetable of vehicles: object of this application is to put at the disposal of users (7) on a display (17) optionally with a printer the expected actual timetable of passage of the first arriving bus or vehicle (4) that interests the user, based on the information received about the localisation of said vehicle. The information coming from the vehicle (4) about its localisation is compared with the expected passage timetable, to adjust the expected theoretical timetable, and provide users with an actual information. The information about the difference between the actual and the theoretical timetable is propagated along the line up to a fixed peripheral station and/or stake (2) which is already waiting for another vehicle on the same line.
D) Information on the conditions of the run: this has the function of informing the vehicle (4) drivers about the correspondence between the planned run schedule and the actual run timetable and pointing out the conditions, in order to adjust their run timetable. Besides improving the visualisation of the information with respect to the old paper-based system, the use of displays and LEDs allows the center (6) to change the planned timetables quickly, to receive a feedback permitting a more correct time planning and to check whether drivers can respect it.
E) Emergency signal: this is a service intended for the vehicle (4) drivers, who can ask for assistance to the data collection, control, processing and display center (6) by pushing a button. The system on the mobile means (4) connects with the node (2, 3) of the network (1) nearest to the vehicle.
   Upon reception of the message, the network provides to re-transmit it to said center (6) and, along the run, to allow the management of the necessary actions originating from the emergency, for instance, the non arrival of an expected bus.
F) Stop on request: some fixed peripheral stations and/or stakes (2) may be provided with a button for optional stops, which allows users (7) to ask for an optional deviation from the run. By pushing the button, the user is informed that the request has been received and the time he has to wait before the next passage of the vehicle (4). When the driver reaches one of the fixed peripheral stations and/or stakes (2) preceding the point of the optional deviation required, he receives the deviation order. As a consequence, the system automatically updates the subsequent run times taking into account the deviation made.

The management of public transport means (4) is one of the applications that may be supported by the radio network of the system of the invention.

Other applications may be:
I) Management of traffic-lights systems: with the information coming from the management of the actual timetable and the localisation of the vehicles, it is possible to control the traffic-lights network in order to propose a preferential path. The communications can be managed either by an application level, located on the fixed peripheral station and/or stake (2) or repeater (3) nearest to the traffic-lights system which sends by radio a commutation order, or by sending the order from the vehicle (4), which, having mapped in the memory the traffic-lights of the whole path, connects to the network (1) and sends to the concerned traffic-lights installation the planned commutation order, so as to arrive at the installation with a green light.
   In this case, the traffic-lights system becomes a terminal of fixed access to the network, with an application level that allows it to control the commutation times of the traffic-lights according to the requests received.
II) Integrated management of municipality-owned services and additional social services: in consideration of the fact that the system ensures the possibility of transmitting point-to-point, its function may be extended also to other services that are of utility for users (7), for instance: emergency calls, remote-aid, ambulance, first-aid; requests of various technical assistance, such as plumbers, ironmongers; environmental monitoring; integration of several public transport services, such as train/bus/ferryboat, extra-town or in town; integration of the monitoring of other services, such as: garbage collection, wardens, fire brigade, police, and so on.
III) Management of parking lots: it is possible to manage the public parking lots by orienting dynamically and in real time the users towards free areas.
   Variously located information boards and monitoring systems in the parking areas perform the function of terminals connected to each other: the changes in availability are transmitted in real time to the board network, orienting the users towards the nearest available parking areas.
IV) Management of electronic information boards: as for the information on parking lots, series of variable information such as information on traffic, sport results, stock exchange information, publicity information and so on, may be supplied to users by means of boards connected with each other and the data collection, control, processing and display center (6), through a special radio network. In this case, the only network terminals are the information center and the information boards.

The extreme access flexibility, the zero communication cost for the service provider and the low installation costs, render the system of the present invention particularly suitable to supply a whole range of town services.

For a better understanding of the system of the present invention some examples of practical application and use are indicated.
1) Access to the theoretical timetable of arrival of a vehicle, for instance of a bits: the data collection, control, processing and display center (6) collects the data received from the vehicle, processes them and saves the results concerning the expected timetable, stake by stake. The user can access the information concerning his stop through the keyboard (18) and the display (17) of the respective stake (2).
2) On-line information of the arrival of a precise bus: the onboard electronic devices (4), through the corresponding data generation, processing, receipt, management and transmission procedures, identify the arrival at a reference point, for instance a stake (2). Subsequently a comparison is made between the theoretical and the effective timetables in such reference point, ascertaining the possible cumulated delay; if such delay is relevant with respect to the last status transmitted, the bus, through its radio (21) and the net (1), sends an update of the timetable to the various stakes on the same line. The user, through the keyboard (18) and the display (17) of the stake (2) corresponding to his stop, can thus visualize the last delay received and how much he has to wait before the arrival of the bus.
3) Bus localization procedure: the onboard electronic devices (4), through the corresponding data generation, processing, receipt, management and transmission procedures, identify the arrival at a reference point, for instance a stake (2). In case a programmed event should take place (for instance a timer expiry, a cumulated delay above a certain value and the like), from the bus, through the net (1), is transmitted the information concerning the reference point reached and the arrival to or transit time in front of such reference point.

Although the present invention has been described in conjunction with specific solutions solely reported by way of non-limiting examples, it is evident that many alternatives and variations will be apparent to those skilled in the art in light of the foregoing description. Accordingly, the invention is intended to embrace all the alternatives and variations that fall within the spirit and scope of the appended claims.

## Claims

1. A data transmission and service management system for public transports, characterized in that it comprises 〈〈intelligent〉〉 fixed peripheral stations and/or stakes (2) or generation, processing, management and/or remote re-loading and/or transmission and/or re-transmission of data and optional intermediate connecting devices or repeaters (3) that, together with the fixed peripheral stations and/or stakes (2), form an 〈〈intelligent〉〉 radio network (1) wherein each component acts as a point of access, formation and processing of the information and optional direct and/or indirect distribution of the same; said network (1) being connected through transport means (radio, PSTDN, ISDN, optical fibres, GSM, satellite broadcasting, UMTS and the like), with a data collection, control, processing and display center (6) and/or with fixed terminals and/or mobile terminals (4, 8) that can be localised also through the access points.

2. The system according to claim 1, characterized in that the network (1) is constituted of a whole of devices or nodes (fixed peripheral stations and/or stakes (2), repeaters (3)), able each to connect temporarily by radio with other adjoining devices; information being transferred from a point to another point of the network (1) through series of nodes that form possible logic pathways between the sender and the addressee, and the connection between two elements of the network being temporary and limited to the transit of the information between the two elements.

3. The system according to claims 1 or 2, characterized in that the transfer to destination of the messages received or created by the transmitting and/or addressing nodes (2) (3) is made on pre-defined runs or alternative runs; a series of fixed or mobile access terminals being hooked on to the network (1).

4. The system according to anyone of the preceding claims, characterized in that each fixed peripheral station and/or stake (2) comprises a radio (14) for the communication with adjoining nodes and/or terminals; one or more microprocessors (15); one or more memories (16) for the management of communications and the re-addressing of the messages; optionally at least one display (17) for the visualisation of the information to users (7) optionally with a printer; optionally at least one keyboard (18) available to users (7) dedicated to information requests and/or communication to other means connected to the network (1); optionally a radio marker (19); and optionally sensors (20).

5. The system according to anyone of the preceding claims, characterized in that each repeater (3) comprises: at least one radio (10) for the communication between adjoining nodes and of access to terminals; one or more microprocessors (11) and one or more memories (12) for the management of communications and the re-addressing of messages, and optionally sensors (13).

6. The system according to anyone of the preceding claims, characterized in that the devices for the connection between different networks (gateway) (5) include:
a) radio devices which accept communications from different networks that cannot have a 〈〈dialogue〉〉 with each other,
b) satellite transmission devices that allow a node-to-node or node-to-terminal communication,
c) fixed devices that utilise a fixed support network as one of the carriers, such as a commuted telephone line or an optical fibre local network, to connect different sections or networks to each other; said fixed devices being connectable with other networks, such as Internet.

7. The system according to anyone of the preceding claims, characterized in that one or more virtual networks is comprised in a fixed structure of a unique network (1), composed of various fixed peripheral stations and/or stakes (2) and repeaters (3).

8. The system according to anyone of the preceding claims, characterized in that the fixed access terminals comprise a data collection, control, processing and display center (6), one or more access points for users (7), optionally provided with a keyboard (18) and/or a display (17) and optionally a printer; said terminals being permanently connected with a node (2, 3) of the network (1) or with a gateway (5).

9. The system according to anyone of the preceding claims, characterized in that the mobile access terminals are terminals applied onboard of the transport means (4) and/or portable terminals (8) for the maintenance of the network (1); said mobile terminals being able to shift within the network (1) and being connected to said network (1) by means of a temporarily and precise radio connection, through one of the nodes (2, 3) of the system.

10. The system according to claim 9, characterized in that the terminals applied onboard of the transport means (4) are constituted of: a radio (21) for connecting to the network nodes or other terminals; one or more microprocessors (22) and one or more memories (23) of generation, processing, management and/or remote loading and/or transmission and/or re-transmission and memorisation of the supporting database (24); optionally a display (25); optionally a keyboard (26); optionally one or more external information devices such as: radio marker (27), odometer (28), GPS (29), door opening (30), and sensors (31).

11. The system according to claim 9, characterized in that the portable terminals (8) are those supplied to users and operators; they are terminals for the maintenance of the network, terminals for the supply of information to isolated zones of the network, terminals supplied to the users for supplementary services to be implemented.

12. The system according to claim 10, characterized in that the radio marker (27) is constituted of a transponder or a short-reach radio with an associated code, fixedly positioned along the vehicles' runs.

13. The system according to anyone of the preceding claims, characterized in that it comprises accesses connected to a node (2, 3) of the network (1), such connection being of the serial (also USB) or parallel type, directed towards the internal memory of one of the two connected devices, or of the type with hardware code of the messages (keyboard).

14. The system according to anyone of the preceding claims, characterized in that the data collection, control, processing and display center (6) comprises one or more computers, optionally connected to form a LAN provided with a special software, connected to the network by wiring harness, performing the function of controlling the system, managing the network maintenance, monitoring the service and optionally managing the network architecture, with monitoring of the progress of the service and/or sending messages to the network terminals or nodes (2, 3).

15. The system according to anyone of the preceding claims, characterized in that it comprises:
A) means for the management of the localisation of public transport means with: A.1) determination of the position of the movable means, through either a radio marker, door opening, odometer and/or GPS system; A.2) devices for the transmission of the information to the center and the users;
B) means for the management of theoretical passage timetable of vehicles;
C) means for the management of actual passage timetable of vehicles;
D) means for the information on the situation of the run;
E) signalling means for emergency interventions;
F) call means for stops upon request.

16. The system according to anyone of the preceding claims, characterized in that it comprises the following additional management means:
I) management means of traffic-lights,
II) integrated management means of municipality-owned services and additional social services,
III) management means of parking lots, and
IV) management means of information electronic boards.
